(19) Europäisches Patentamt / European Patent Office / Office européen des brevets

(11) **EP 3 628 938 A1**

(12) **EUROPEAN PATENT APPLICATION**
published in accordance with Art. 153(4) EPC

(43) Date of publication:
01.04.2020 Bulletin 2020/14

(51) Int Cl.:
*F24H 9/20* (2006.01)          *F24S 50/00* (2018.01)
*F24H 1/10* (2006.01)

(21) Application number: 18922114.6

(22) Date of filing: 28.12.2018

(86) International application number:
PCT/CN2018/124910

(87) International publication number:
WO 2019/242284 (26.12.2019 Gazette 2019/52)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 20.06.2018 CN 201810639060

(71) Applicants:
• GD Midea Heating & Ventilating Equipment Co., Ltd.
  Foshan Guangdong 528311 (CN)

• Midea Group Co., Ltd.
  Foshan, Guangdong 528311 (CN)

(72) Inventor: HUANG, Liangwei
Foshan
Guangdong 528311 (CN)

(74) Representative: Grünecker Patent- und Rechtsanwälte
PartG mbB
Leopoldstraße 4
80802 München (DE)

(54) **MULTI-HEAT-SOURCE HOT WATER UNIT, AND METHOD AND APPARATUS FOR CONTROLLING MULTI-HEAT-SOURCE HOT WATER UNIT**

(57) Provided are a control method and a control device for a water-heating unit equipped with a plurality of heat sources. The control method includes: acquiring heat required to heat water in the water-heating unit to a target temperature; acquiring respective costs for generating the heat from each of the plurality of heat sources; and acquiring a lowest value from the respective costs, and selecting a heat source corresponding to the lowest value to heat the water in the water-heating unit. Therefore, a suitable heat source is selected, according to respective operating costs for each of the plurality heat sources, for heating the water in the water-heating unit, thereby saving more operating costs for a user.

acquiring heat required to heat water in the water-heating unit to a target temperature — S1

acquiring respective costs for generating the heat from each of the plurality of heat sources — S2

acquiring a lowest value from the respective costs, and selecting a heat source corresponding to the lowest value to heat the water in the water-heating unit — S3

Figure 1

EP 3 628 938 A1

## Description

## CROSS-REFERENCE TO RELATED APPLICATION

This application claims a priority to and benefits of Chinese Patent Application Serial No. 201810639060.6, filed with the State Intellectual Property Office of P. R. China on June 20, 2018, the entire content of which is incorporated herein by reference.

## FIELD

The present disclosure relates to the field of water-heating unit control technology, and in particular to a control method for a water-heating unit equipped with a plurality of heat source, a control device for a water-heating unit equipped with a plurality of heat source, and a water-heating unit.

## BACKGROUND

At present, there are many kinds of heat sources for water-heating products, such as solar energy, heat pump, electricity, fuel oil or gas. With the advancement of technology, there are increasingly more types of water-heating unit equipped with a plurality of heat sources, for its ease of installation and powerful functions.

However, when it comes to selection of heat source to used, all those units adopt the principle that the heat source with less energy consumption takes preference to that with more energy consumption. The control mode is oversimplified, failing to effectively save the operation cost for the user.

## SUMMARY

The present disclosure aims to solve at least one of the technical problems in the related technologies to some extent. Therefore, a first object of the present disclosure is to propose a control method for a water-heating unit equipped with a plurality of heat sources, so as to select a suitable heat source to heat the water in the water-heating unit according to the operation cost, thereby saving more operation cost for the user.

A second object is to propose a non-transitory computer readable storage medium.

A third object is to provide a control device for a water-heating unit equipped with a plurality of heat sources.

A fourth object is to propose a water-heating unit equipped with a plurality of heat sources.

In order to achieve the above objects, an embodiment of the first aspect of the present disclosure has proposed a control method for a water-heating unit equipped with a plurality of heat sources, including: acquiring heat required to heat water in the water-heating unit to a target temperature; acquiring respective costs for generating the heat from each of the plurality of heat sources; and acquiring a lowest value from the respective costs, and selecting a heat source corresponding to the lowest value to heat the water in the water-heating unit.

According to the control method for the water-heating unit equipped with a plurality of heat sources in an embodiment of the present disclosure, heat required to heat water in the water-heating unit to a target temperature is acquired; respective costs for generating the heat from each of the plurality of heat sources is acquired; a lowest value from the respective costs is acquired; and a heat source corresponding to the lowest value is selected to heat the water in the water-heating unit. Therefore, a suitable heat source is selected, according to respective operating costs for each of the plurality heat sources, for heating the water in the water-heating unit, thereby saving more operating costs for a user.

In an embodiment of the present disclosure, the plurality of heat sources includes at least two devices selected from a solar device, a heat pump device, a non-renewable energy device and an electric auxiliary heat device.

In an embodiment of the present disclosure, the plurality of heat sources includes the solar device, and the method further includes: detecting and determining that the solar device meets a first start-up condition; and directly controlling the solar device to heat the water in the water-heating unit.

In an embodiment of the present disclosure, the plurality of heat sources includes the heat pump device, and the method further includes: detecting and determining that the heat source corresponding to the lowest value is the heat pump device; controlling the heat pump device to heat the water in the water-heating unit when detecting and determining that the heat pump device meets a second start-up condition; controlling a heat source corresponding to a second lowest value from the respective costs to heat the water in the water-heating unit when detecting and determining that the heat pump device does not meet the second start-up condition.

In an embodiment of the present disclosure, acquiring respective costs for generating the heat from each of the plurality of heat sources includes: acquiring respective unit prices and heat conversion efficiencies of each heat source; and acquiring the respective costs for generating the heat from each heat source according to the respective unit prices and heat conversion efficiencies, wherein the heat is acquired for a preset time as an acquiring period.

In order to achieve the above objects, an embodiment in the second aspect of the present disclosure has proposed a non-transitory computer readable storage medium having stored therein a computer program that, when executed by a processor, causes the processor to perform a control method for a water-heating unit equipped with a plurality of heat sources as discussed above.

According to the non-transitory computer readable storage medium in an embodiment of the present disclosure, with the control method for the water-heating unit equipped with a plurality of heat sources, a suitable heat source is selected, according to respective operating costs for each of the plurality heat sources, for heating the water in the water-heating unit, thereby saving more operating costs for a user.

In order to achieve the above objects, an embodiment in the third aspect of the present disclosure has proposed a control device for water-heating unit equipped with a plurality of heat sources, including: a heat acquiring module, configured to acquire heat required to heat water in the water-heating unit to a target temperature; a cost acquiring module, configured to acquire respective costs for generating the heat from each of the plurality of heat sources; and a control module, configured to acquire a lowest value from the respective costs and select a heat source corresponding to the lowest value to heat the water in the water-heating unit, according to the heat required to heat water in the water-heating unit to the target temperature, acquired by the heat acquiring module, and according to the respective costs for generating the heat from each of the plurality of heat sources, acquired by the cost acquiring module.

According to the control device for the water-heating unit equipped with a plurality of heat sources in an embodiment of the present disclosure, the heat acquiring module acquires the heat required to heat water in the water-heating unit to a target temperature; the cost acquiring module acquires the respective costs for generating the heat from each of the plurality of heat sources; and the control module acquires the lowest value from the respective costs and select the heat source corresponding to the lowest value to heat the water in the water-heating unit, according to the heat required to heat water in the water-heating unit to the target temperature, acquired by the heat acquiring module, and according to the respective costs for generating the heat from each of the plurality of heat sources, acquired by the cost acquiring module. Therefore, a suitable heat source is selected, according to respective operating costs for each of the plurality heat sources, for heating the water in the water-heating unit, thereby saving more operating costs for a user.

In an embodiment of the present disclosure, the plurality of heat sources includes at least two devices selected from a solar device, a heat pump device, a non-renewable energy device and an electric auxiliary heat device.

In an embodiment of the present disclosure, the plurality of heat sources includes the solar device, and the control module is further configured to detect and determine that the solar device meets a first start-up condition; and directly control the solar device to heat the water in the water-heating unit.

In an embodiment of the present disclosure, the plurality of heat sources includes the heat pump device, and the control module is configured to detect and determine that the heat source corresponding to the lowest value is the heat pump device; control the heat pump device to heat the water in the water-heating unit when detect and determine that the heat pump device meets a second start-up condition; control a heat source corresponding to a second lowest value from the respective costs to heat the water in the water-heating unit when detect and determine that the heat pump device does not meet the second start-up condition.

In an embodiment of the present disclosure, the cost acquiring module is specifically configured to acquire respective unit prices and heat conversion efficiencies of each heat source; and acquire the respective costs for generating the heat from each heat source according to the respective unit prices and heat conversion efficiencies, wherein the heat is obtained for a preset time as an acquiring period.

In order to achieve the above objects, an embodiment in the fourth aspect of the present disclosure has proposed a water-heating unit equipped with a plurality of heat sources, which includes the control device as described above.

According to the water-heating unit equipped with a plurality of heat sources in an embodiment of the present disclosure, with the control device, a suitable heat source is selected, according to respective operating costs for each of the plurality heat sources, for heating the water in the water-heating unit, thereby saving more operating costs for a user.

Additional aspects and benefits of the present disclosure will be presented in the following sections, part of which will become apparent from the following descriptions or through the practice of the present disclosure.

**BRIEF DESCRIPTION OF THE DRAWINGS**

The above and/or additional aspects and advantages of the present disclosure will become apparent and easy to understand with the description of embodiments in combination with the attached drawings below, wherein:

Figure 1 is a flow chart for the control method for water-heating unit equipped with a plurality of heat sources according to the embodiments of the present disclosure;

Figure 2 is a flow chart of the control method for water-heating unit equipped with a plurality of heat sources according to an embodiment of the present disclosure;

Figure 3 is a flow chart of the control method for water-heating unit equipped with a plurality of heat sources according to a specific embodiment of the present disclosure; and

Figure 4 is a block diagram for the control device of water-heating unit equipped with a plurality of heat sources according to the embodiments of the present disclosure.

**DETAILED DESCRIPTION**

The embodiments of the present disclosure are described in detail below, and examples of the embodiments are shown in the attached drawings, where throughout which the identical or similar labels are used to denote the identical or similar elements or elements having identical or similar functions. The embodiments described below by reference to the attached drawings are illustrative and are used only to interpret the present disclosure but should not be construed as restrictions on the present disclosure.

A control method for a water-heating unit equipped with a plurality of heat sources, a non-transitory computer readable storage medium, a control device for a water-heating unit equipped with a plurality of heat sources, and a water-heating unit equipped with a plurality of heat sources according to embodiments of the present disclosure are described below with reference to the drawings.

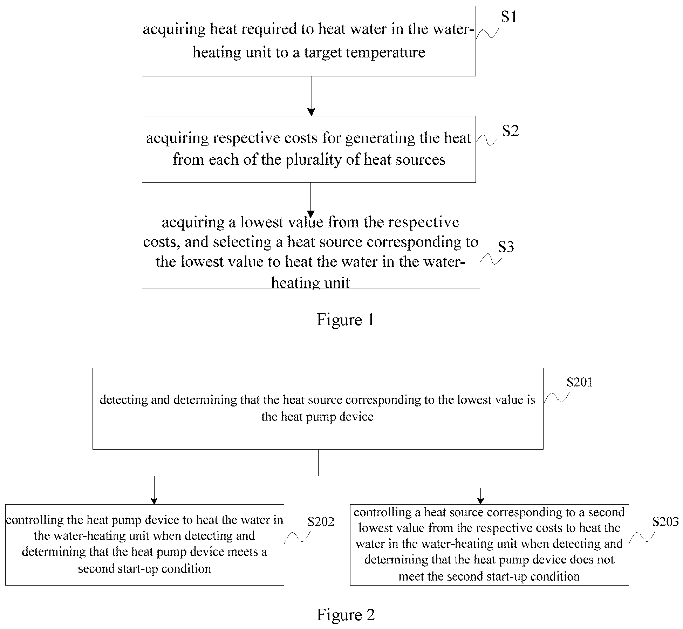

Figure 1 is a flow chart for a control method for a water-heating unit equipped with a plurality of heat sources according to the embodiments of the present disclosure. As shown in Figure 1, the control method for the water-heating unit equipped with a plurality of heat sources according to the embodiments of the present disclosure can include:

S1, acquiring heat required to heat the water in the water-heating unit to a target temperature, wherein the preset time can be calibrated according to the actual situation.

Specifically, the water-heating unit can be equipped with a controller, which may be provided with a predefined variable working condition meter, and the variable working condition meter can include the capacity output value, the ambient temperature, the outflow water temperature and the like; the water-heating unit may also include inflow water sensing bulb, outflow water sensing bulb and flow meter. In addition, in order to ensure the normal operation of the water-heating unit, auxiliary devices such as water pump and shut-off valve are also provided.

The capability output value, the ambient temperature, the outflow water temperature, and the heat required to heat the water in the water-heating unit to the target temperature may be pre-calibrated to establish a mapping relationship, thereby acquiring the heat required to heat the water in the water-heating unit to the target temperature directly from the table according to the mapping relationship after acquiring the above-mentioned capability output value, ambient temperature, and outflow water temperature. Since the ambient temperature is added to the mapping table, the obtained heat is more in line with the actual situation, thus effectively improving the accuracy of heat acquiring.

In addition, when the water-heating unit receives the start-up request instruction, the water pump can be put into a test run to detect the current outflow water temperature and the water outflow rate before acquiring the heat required to heat the water in the water-heating unit to the target temperature through the following formula (1):

$$Q_0 = C*L*\rho*\left(T_s - T_{out}\right) \quad (1),$$

in the formula, $Q_0$ indicates the required heat, C indicates the specific heat capacity of water, L indicates water outflow rate, $\rho$ indicates the density of water, $T_s$ indicates the target temperature, and $T_{out}$ indicates the outflow water temperature. Among them, the target temperature is the water temperature required by the user, which can be set by the user, or can be automatically set by the system according to the user's using habit or the ambient temperature.

It should be noted that there are various ways to obtain the heat required to heat the water in the water-heating unit to the target temperature. The above formula (1) is only an exemplary description, and in actual calculation, it is also possible to correct the required heat according to the ambient temperature so as to improve the accuracy of the calculation.

S2, acquiring respective costs for generating the heat from each of the plurality of heat sources.

In embodiments of the present disclosure, the plurality of heat sources may include at least two devices selected from a solar device, a heat pump device, a non-renewable energy device (such as a fuel device, a coal burning device, and some non-renewable energy sources) and an electric auxiliary heat device. Among them, the solar energy device has the lowest energy consumption and requires no cost. The heat pump device, the non-renewable energy device and the electric auxiliary heat device have relatively higher energy consumption, and the required costs can be calculated according to the actual charging standard; for example, the heat pump device and the electric auxiliary heat device are calculated according to the preset electricity price. The cost of the non-renewable energy device is calculated based on the preset gas price.

Take the electric auxiliary heat device as an example. At present, the price of electricity from the grid is divided into by- classification price and time-of-use price. The time-of-use price refers to pricing according to the time of use, that is, the twenty-four hours in one day is divided into three periods: peak, off-peak, and normal, with the electricity price for normal hours as the basic price. During the peak hours, the price of electricity will rise, and during the off-peak hours, the price will drop; the price difference between the peak and the valley will be very large. Therefore, when calculating the cost of the electric auxiliary heat device, it can be calculated according to the electricity price corresponding to each time period.

Further, according to an embodiment of the present disclosure, acquiring respective costs for generating the heat from each of the plurality of heat sources includes: acquiring respective unit prices and heat conversion efficiencies of each heat source; and acquiring the respective costs for generating the heat from each heat source according to the respective unit prices and heat conversion efficiencies, wherein the heat is acquired for a preset time as an acquiring period.

Specifically, when the heat conversion efficiencies of all heat sources are the same with each other, the costs of generating the heat from each of the plurality of heat sources can be obtained according to the unit price of each heat source. However, in most cases, the heat conversion efficiencies are different, therefore, at first, the unit price and heat conversion efficiency of each heat source can be obtained before calculating the costs of generating the heat from each of the plurality of heat sources based on the unit price and heat conversion efficiency of each heat source.

S3, acquiring a lowest value from the respective costs and selecting a heat source corresponding to the lowest value to heat the water in the water-heating unit.

Specifically, after acquiring the costs of generating the heat from each of the plurality of heat sources, by comparing these costs, a heat source with the lowest cost is selected to heat the water in the water-heating unit, thereby minimizing the operation cost of the current water-heating unit to save more operating costs for the user. Therefore, selecting a suitable heat source to heat the water in the water-heating unit according to the operating cost can save more operating costs for the user.

In an embodiment of the present disclosure, the plurality of heat sources includes a solar device, and the method further includes: detecting and determining that the solar device meets a first start-up condition; and directly controlling the solar device to heat water in the water-heating unit.

Specifically, detecting and determining that the plurality of heat sources includes a solar device. Since the solar device has the lowest energy consumption and therefore the highest priority, it can be first determined whether the solar device meets the first start-up condition; for example, when the solar device can work normally and the current illumination intensity detected by the solar device is greater than the preset intensity, it can be determined that the solar device meets the first start-up condition. At this time, the solar device is directly controlled to heat the water in the water-heating unit, and the operating cost generated by the water-heating unit is zero, so that the operating cost of the user is minimized.

In an embodiment of the present disclosure, as shown in Figure 2, detecting and determining that the plurality of heat sources includes a heat pump device, and the control method for the water-heating unit equipped with a plurality of heat sources may further include:

S201, detecting and determining that the heat source corresponding to the lowest value is the heat pump device;
S202, controlling the heat pump device to heat the water in the water-heating unit when detecting and determining that the heat pump device meets a second start-up condition;
S203, controlling a heat source corresponding to a second lowest value from the respective costs to heat the water in the water-heating unit when detecting and determining that the heat pump device does not meet the second start-up condition.

Specifically, in the actual operating process, in addition that the solar device may be impacted by the climate, the heat pump device may also be affected by the climate, so it is required to detect and determine that the plurality of heat sources includes the heat pump device, and after acquiring a heat source corresponding to the lowest value, detect and confirm this heat source is heat pump device , and further detect and confirm that the heat pump device meets the second start-up condition. For example, the heat pump device can work normally and the ambient temperature detected by the heat pump device is higher than the preset temperature, and if so, it can be determined that the heat pump device meets the second start-up condition. And at this time, the heat pump device is controlled to heat the water in the water-heating unit. If the heat pump device does not meet the second start-up condition, the heat source corresponding to a second lowest value shall be selected to heat the water in the water-heating unit.

Of course, in practical applications, it is also possible to first determine whether the heat pump device meets the second start-up condition, and if so, calculate the respective costs for generating the heat from each of the plurality of heat sources, and obtain the lowest value from the respective costs, and select the heat source corresponding to the lowest value to heat the water in the water-heating unit, so that the calculation of the cost can be reduced to a certain extent, and the specific method can be selected according to actual needs.

Therefore, according to the control method for the water-heating unit equipped with a plurality of heat sources in embodiments of the present disclosure, a suitable heat source is selected, according to respective operating costs for each of the plurality heat sources, for heating the water in the water-heating unit, thereby saving more operating costs for a user.

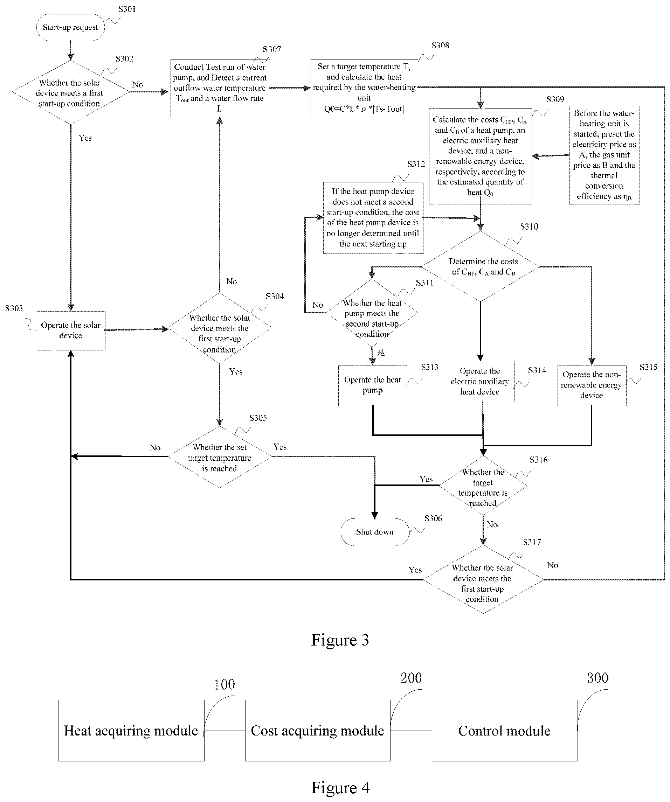

To enable those skilled in the art to more clearly understand the present disclosure, Figure 3 is a flow chart of a control method for a water-heating unit equipped with a plurality of heat sources according to an embodiment of the present disclosure. As shown in Figure 3, the control method for the water-heating unit equipped with a plurality of heat sources may include:

S301, the water-heating unit receives a start-up request.
S302, after the water-heating unit receives the start-

up request, preferably determine whether the solar device meets the firs start-up condition according to the energy consumption priority. If yes, go to Step S303; if not, go to step S307.

S303, operate the solar device.

S304, detect whether the solar device meets the first start-up condition. If yes, go to Step S305; if not, go to Step S307.

S305, judge whether the temperature of water in the water-heating unit reaches the preset target temperature. If yes, go to Step S306; if not, back to Step S303.

S306, after the target temperature is reached, shut it down.

S307, conduct test run of water pump. Detect the current outflow water temperature $T_{out}$ and the water flow rate L.

S308, by setting a target temperature $T_s$, calculate the heat required to heat the water in the water-heating unit to the target temperature through the formula: $Q_0 = C*L*\rho*(T_s - T_{out})$.

S309, calculate respective costs $C_{HP}$, $C_A$ and $C_B$ of the heat pump device, the electric auxiliary heat device, the non-renewable energy device according to the estimated quantity of heat $Q_0$. It should be noted that, before the water-heating unit is started, the electricity price is preset as A, the gas unit price as B and the thermal conversion efficiency as $\eta_B$.

S310, determine the cost for the heat pump device $C_{HP}$, the cost for the electric auxiliary heat device $C_A$ and the cost for the non-renewable energy device $C_B$. If the cost of heat pump device is the highest, go to Step S311; if the cost for electric auxiliary heat device is the highest, go to Step S314; if the cost for the non-renewable energy device is the highest, go to Step S315.

S311, determine whether the heat pump device meets the second start-up condition. If yes, go to Step S313; if not, go to Step S312.

S312, if the heat pump device does not meet the second start-up condition, the cost for the heat pump device is no longer determined until the next starting up.

S313, operate the heat pump device.

S314, operate the electric auxiliary heat device.

S315, operate the non-renewable energy device.

S316, determine whether the target temperature is reached. If yes, back to Step S306; if not, go to Step S317.

S317, determine whether the solar device meets the first start-up condition. If yes, back to Step S303; if not, back to Step S309.

That is to say, when the water-heating unit is equipped with a plurality of heat sources, first determining whether the heat source with lowest energy consumption, that is, the heat source with the highest priority (for example, the solar device), meets the first start-up condition and if yes, directly control the heat source to heat the water in the water-heating unit; if not, calculate the energy required to heat the water in the water-heating unit to the target temperature according to the relevant parameters, and compare them before selecting a heat source with the lowest operating cost to heat the water in the water-heating unit. Moreover, during operation, climate has a great impact on some heat sources (such as solar devices and heat pumps device), which may cause them not meet the operational requirements. Therefore, it is necessary to judge the used conditions of the two at regular intervals. If the conditions cannot be met, the water in the water-heating unit shall be heated by selecting a suitable heat source through cost comparison. What's more, during operation, the price of electricity may be different at different periods, so it is necessary to recalculate to determine the heat source with the lowest cost at a certain time to ensure that the water-heating unit is always in working at the lowest operating cost until the target temperature is reached.

In summary, according to the control method for the water-heating unit equipped with a plurality of heat sources in embodiments of the present disclosure, it is required to acquire heat required to heat water in the water-heating unit to a target temperature; acquire respective costs for generating the heat from each of the plurality of heat sources; and acquire a lowest value from the respective costs, and select a heat source corresponding to the lowest value to heat the water in the water-heating unit. Therefore, a suitable heat source is selected, according to respective operating costs for each of the plurality heat sources, for heating the water in the water-heating unit, thereby saving more operating costs for a user.

In addition, embodiments of the present disclosure have also proposed a non-transitory computer readable storage medium having stored therein a computer program that, when executed by a processor, causes the processor to perform a control method for a water-heating unit equipped with a plurality of heat sources as described above.

According to the non-transitory computer-readable storage medium in an embodiment of the present disclosure, with the control method for the water-heating unit equipped with a plurality of heat sources, a suitable heat source is selected, according to respective operating costs for each of the plurality heat sources, for heating the water in the water-heating unit, thereby saving more operating costs for a user.

Figure 4 is a block diagram for the control device of water-heating unit equipped with a plurality of heat sources according to the embodiments of the present disclosure.

As shown in Figure 4, the control device of the water-heating unit equipped with a plurality of heat sources includes: a heat acquiring module 100, a cost acquiring module 200, and a control module 300.

The heat acquiring module 100 is configured to acquire heat required to heat water in the water-heating unit to a target temperature; the cost acquiring module 200 is configured to acquire respective costs for generating the heat from each of the plurality of heat sources; the control module 300 is configured to acquire a lowest value from the respective costs and select a heat source corresponding to the lowest value to heat the water in the water-heating unit, according to the heat required to heat water in the water-heating unit to the target temperature, acquired by the heat acquiring module, and according to the respective costs for generating the heat from each of the plurality of heat sources, acquired by the cost acquiring module.

In an embodiment of the present disclosure, the plurality of heat sources includes at least two devices selected from a solar device, a heat pump device, a non-renewable energy device and an electric auxiliary heat device.

In an embodiment of the present disclosure, the plurality of heat sources includes the solar device, and the control module 300 is further configured to detect and determine that the solar device meets a first start-up condition; and directly control the solar device to heat water in the water-heating unit.

In an embodiment of the present disclosure, the plurality of heat sources includes the heat pump device, and the control module 300 is further configured to detect and determine that the heat source corresponding to the lowest value is the heat pump device; control the heat pump device to heat the water in the water-heating unit when detect and determine that the heat pump device meets a second start-up condition; control a heat source corresponding to a second lowest value from the respective costs to heat the water in the water-heating unit when detect and determine that the heat pump device does not meet the second start-up condition.

In an embodiment of the present disclosure, the cost acquiring module 200 is specifically configured to acquire respective unit prices and heat conversion efficiencies of each heat source, and acquire the respective costs for generating the heat from each heat source according to the respective unit prices and heat conversion efficiencies, wherein the heat is obtained for a preset time as an acquiring period.

It should be noted that the foregoing explanation of the embodiment of the control method for the water-heating unit equipped with a plurality of heat sources is also applicable to the control device of the water-heating unit equipped with a plurality of heat sources of such embodiment, and the details are not described herein again.

According to the for the water-heating unit equipped with a plurality of heat sources in an embodiment of the present disclosure, the heat acquiring module acquires heat required to heat water in the water-heating unit to a target temperature; the cost acquiring module acquires respective costs for generating the heat from each of the plurality of heat sources; and the control module acquires a lowest value from the respective costs and select a heat source corresponding to the lowest value to heat the water in the water-heating unit, according to the heat required to heat water in the water-heating unit to the target temperature, acquired by the heat acquiring module, and according to the respective costs for generating the heat from each of the plurality of heat sources, acquired by the cost acquiring module. Therefore, a suitable heat source is selected, according to respective operating costs for each of the plurality heat sources, for heating the water in the water-heating unit, thereby saving more operating costs for a user.

In addition, the embodiments of the present disclosure have also proposed a water-heating unit equipped with a plurality of heat sources, which includes the control device as described above.

According to the water-heating unit equipped with a plurality of heat sources in an embodiment of the present disclosure, with the control device, a suitable heat source is selected, according to respective operating costs for each of the plurality heat sources, for heating the water in the water-heating unit, thereby saving more operating costs for a user.

In the description of the present disclosure, the terms "first" and "second" are used for descriptive purposes only, and are not to be construed as indicating or implying a relative importance or implicitly indicating the number of technical features indicated. Thus, a feature defined as "first" or "second" may, explicitly or implicitly, include one or more such features. In the description of the present disclosure, "plurality of" means at least two, such as two and three, unless specifically defined otherwise.

In the description of the present disclosure, unless otherwise expressly specified and defined, the terms "installation", "linking", "connection" and "fixing" shall be understood generally; for example, it may be fixed connection, detachable connection, or integral connection; or mechanical or electrical connections; or direct linking, indirect linking through an intermediate medium, or internal connection or interactive relationship of two components. The specific meaning of the above terms in the present disclosure may be understood on a case by case basis by ordinary technical personnel in the field.

In the description of the present disclosure, the terms "an embodiment", "some embodiments", "examples", "specific example" or "some examples" mean that the specific feature, structure, material or characteristic of that embodiment or example described are included in at least one embodiment or example of the present disclosure. In this description, the schematic presentation of such terms may not refer to the same embodiment or example. Moreover, the specific features, structure, material or characteristics described may be combined in an appropriate manner in any one or plurality of embodiments or examples. In addition, various embodiments or examples described in this description, as well as features of various embodiments or examples, may be integrated and combined by technical personnel in the field.

Although the embodiments of the present disclosure have been presented and described, it can be understood that the above-mentioned embodiments are illustrative and should not be construed as restrictions on the present disclosure. The ordinary technical personnel in the field can make changes, modifications, substitutions and variations of such embodiments within the scope of the present disclosure.

## Claims

1. A control method for a water-heating unit equipped with a plurality of heat sources, comprising:

   acquiring heat required to heat water in the water-heating unit to a target temperature;
   acquiring respective costs for generating the heat from each of the plurality of heat sources; and
   acquiring a lowest value from the respective costs, and selecting a heat source corresponding to the lowest value to heat the water in the water-heating unit.

2. The control method according to claim 1, wherein the plurality of heat sources comprises at least two devices selected from a solar device, a heat pump device, a non-renewable energy device and an electric auxiliary heat device.

3. The control method according to claim 2, wherein the plurality of heat sources comprises the solar device, and the method further comprises:

   detecting and determining that the solar device meets a first start-up condition; and
   directly controlling the solar device to heat the water in the water-heating unit.

4. The control method according to claim 2 or 3, wherein the plurality of heat sources comprises the heat pump device, and the method further comprises:

   detecting and determining that the heat source corresponding to the lowest value is the heat pump device;
   controlling the heat pump device to heat the water in the water-heating unit when detecting and determining that the heat pump device meets a second start-up condition;
   controlling a heat source corresponding to a second lowest value from the respective costs to heat the water in the water-heating unit when detecting and determining that the heat pump device does not meet the second start-up condition.

5. The control method according to claim 1, wherein acquiring the respective costs for generating the heat from each of the plurality of heat sources comprises:

   acquiring respective unit prices and heat conversion efficiencies of each heat source; and
   acquiring the respective cost for generating the heat from each heat source according to the respective unit prices and heat conversion efficiencies,
   wherein the heat is acquired for a preset time as an acquiring period.

6. A non-transitory computer readable storage medium having stored therein a computer program that, when executed by a processor, causes the processor to perform a control method for a water-heating unit equipped with a plurality of heat sources according to any one of claims 1 to 5.

7. A control device for a water-heating unit equipped with a plurality of heat sources, comprising:

   a heat acquiring module, configured to acquire heat required to heat water in the water-heating unit to a target temperature;
   a cost acquiring module, configured to acquire respective costs for generating the heat from each of the plurality of heat sources; and
   a control module, configured to acquire a lowest value from the respective costs and select a heat source corresponding to the lowest value to heat the water in the water-heating unit, according to the heat required to heat water in the water-heating unit to the target temperature, acquired by the heat acquiring module, and according to the respective costs for generating the heat from each of the plurality of heat sources, acquired by the cost acquiring module.

8. The control device according to claim 7, wherein the plurality of heat sources comprises at least two devices selected from a solar device, a heat pump device, a non-renewable energy device and an electric auxiliary heat device.

9. The control device according to claim 8, wherein the plurality of heat sources comprises the solar device, and the control module is further configured to:

   detect and determine that the solar device meets a first start-up condition; and
   directly control the solar device to heat the water in the water-heating unit.

10. The control device according to claim 8 or 9, wherein the plurality of heat sources comprises the heat pump device, and the control module is further configured to:

detect and determine that the heat source corresponding to the lowest value is the heat pump device;
control the heat pump device to heat the water in the water-heating unit when detect and determine that the heat pump device meets a second start-up condition;
control a heat source corresponding to a second lowest value from the respective costs to heat the water in the water-heating unit when detect and determine that the heat pump device does not meet the second start-up condition.

11. The control device according to claim 7, wherein the cost acquiring module is specifically configured to acquire respective unit prices and heat conversion efficiencies of each heat source; and
acquire the respective costs for generating the heat from each heat source according to the respective unit prices and heat conversion efficiencies, wherein the heat is obtained for a preset time as an acquiring period.

12. A water-heating unit equipped with a plurality of heat sources, comprising a control device according to any one of claims 7 to 11.

acquiring heat required to heat water in the water-heating unit to a target temperature — S1

acquiring respective costs for generating the heat from each of the plurality of heat sources — S2

acquiring a lowest value from the respective costs, and selecting a heat source corresponding to the lowest value to heat the water in the water-heating unit — S3

Figure 1

detecting and determining that the heat source corresponding to the lowest value is the heat pump device — S201

controlling the heat pump device to heat the water in the water-heating unit when detecting and determining that the heat pump device meets a second start-up condition — S202

controlling a heat source corresponding to a second lowest value from the respective costs to heat the water in the water-heating unit when detecting and determining that the heat pump device does not meet the second start-up condition — S203

Figure 2

S301

Start-up request

S302

Whether the solar device meets a first start-up condition — No →

S307

Conduct Test run of water pump, and Detect a current outflow water temperature $T_{out}$ and a water flow rate L

S308

Set a target temperature $T_s$ and calculate the heat required by the water-heating unit $Q0=C*L*\rho*|Ts-Tout|$

S309

Before the water-heating unit is started, preset the electricity price as A, the gas unit price as B and the thermal conversion efficiency as $\eta_B$

Calculate the costs $C_{HP}$, $C_A$ and $C_B$ of a heat pump, an electric auxiliary heat device, and a non-renewable energy device, respectively, according to the estimated quantity of heat $Q_0$

S312

If the heat pump device does not meet a second start-up condition, the cost of the heat pump device is no longer determined until the next starting up

Yes

S303

Operate the solar device

S304

Whether the solar device meets the first start-up condition — No ↑

Yes

S310

Determine the costs of $C_{HP}$, $C_A$ and $C_B$

S311

Whether the heat pump meets the second start-up condition — No

是

S313

Operate the heat pump

S314

Operate the electric auxiliary heat device

S315

Operate the non-renewable energy device

S305

Whether the set target temperature is reached — No → / Yes →

S306

Shut down

S316

Whether the target temperature is reached — Yes / No

S317

Whether the solar device meets the first start-up condition — Yes / No

Figure 3

100

Heat acquiring module

200

Cost acquiring module

300

Control module

Figure 4

<table>
<tr><td colspan="2">**INTERNATIONAL SEARCH REPORT**</td><td colspan="2">International application No.<br>**PCT/CN2018/124910**</td></tr>
</table>

**A.     CLASSIFICATION OF SUBJECT MATTER**

F24H 9/20(2006.01)i;   F24S 50/00(2018.01)i;   F24H 1/10(2006.01)i

According to International Patent Classification (IPC) or to both national classification and IPC

**B.      FIELDS SEARCHED**

Minimum documentation searched (classification system followed by classification symbols)

F24H;F24S;F24D;F24J

Documentation searched other than minimum documentation to the extent that such documents are included in the fields searched

Electronic data base consulted during the international search (name of data base and, where practicable, search terms used)

CNTXT; CNABS; DWPI; SIPOABS: 美的暖通, 加热, 热源, 费用, 热量, 太阳能, 热泵, 电, charge?, exes, expendit+, expens +, fare?, fee?, heat, water, heat 3d pump?, feed+

**C.      DOCUMENTS CONSIDERED TO BE RELEVANT**

| Category* | Citation of document, with indication, where appropriate, of the relevant passages | Relevant to claim No. |
|---|---|---|
| PX | CN 108931062 A (GUANGDONG MIDEA HEATING & VENTILATION EQUIPMENT CO., LTD.; MIDEA GROUP CO., LTD.) 04 December 2018 (2018-12-04)<br>claims 1-12 | 1-12 |
| X | CN 105352190 A (SHUNDE POLYTECHNIC) 24 February 2016 (2016-02-24)<br>description, paragraphs [0003-0012] | 1-5, 7-12 |
| Y | CN 107131656 A (GUANGDONG MIDEA HEATING & VENTILATION EQUIPMENT CO., LTD.; MIDEA GROUP CO., LTD.) 05 September 2017 (2017-09-05)<br>description, paragraph [0041] | 6 |
| Y | CN 105352190 A (SHUNDE POLYTECHNIC) 24 February 2016 (2016-02-24)<br>description, paragraphs [0003]-[0012] | 6 |
| A | CN 105240916 A (CHINA SOUTHWEST ARCHITECTURAL DESIGN AND RESEARCH INSTITUTE CORP., LTD.) 13 January 2016 (2016-01-13)<br>entire document | 1-12 |
| A | JP 2017089925 A (MITSUBISHI ELECTRIC CORP.) 25 May 2017 (2017-05-25)<br>entire document | 1-12 |

☑ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **07 March 2019** | **25 March 2019** |

| Name and mailing address of the ISA/CN | Authorized officer |
|---|---|
| **State Intellectual Property Office of the P. R. China**<br>**No. 6, Xitucheng Road, Jimenqiao Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2018/124910**

| C. | DOCUMENTS CONSIDERED TO BE RELEVANT | |
|---|---|---|
| Category* | Citation of document, with indication, where appropriate, of the relevant passages | Relevant to claim No. |
| A | CN 106016739 A (SHANGHAI DFYH ENERGY SAVING TECH. SERVICES CO., LTD.) 12 October 2016 (2016-10-12) entire document | 1-12 |

Form PCT/ISA/210 (second sheet) (January 2015)

**INTERNATIONAL SEARCH REPORT**
Information on patent family members

International application No.

**PCT/CN2018/124910**

| Patent document cited in search report | | | Publication date (day/month/year) | Patent family member(s) | | | Publication date (day/month/year) |
|---|---|---|---|---|---|---|---|
| CN | 108931062 | A | 04 December 2018 | None | | | |
| CN | 105352190 | A | 24 February 2016 | CN | 105352190 | B | 01 December 2017 |
| CN | 107131656 | A | 05 September 2017 | None | | | |
| CN | 105240916 | A | 13 January 2016 | CN | 105240916 | B | 29 June 2018 |
| JP | 2017089925 | A | 25 May 2017 | None | | | |
| CN | 106016739 | A | 12 October 2016 | None | | | |

Form PCT/ISA/210 (patent family annex) (January 2015)

**EP 3 628 938 A1**

**REFERENCES CITED IN THE DESCRIPTION**

**Patent documents cited in the description**

- CN 201810639060